**Europäisches Patentamt**

**European Patent Office**

**Office européen des brevets**

(19)

(11) Veröffentlichungsnummer: **0 186 110**
**B1**

(12)

# EUROPÄISCHE PATENTSCHRIFT

(45) Veröffentlichungstag der Patentschrift:
**10.05.89**

(21) Anmeldenummer: **85116141.4**

(22) Anmeldetag: **18.12.85**

(51) Int. Cl.⁴: **C 08 J 9/06**, C 08 L 23/02, B 29 C 67/22

(54) Verfahren zum Herstellen von vernetzten geschlossenzelligen Polyolefin-Schaumstoffkörpern.

(30) Priorität: **21.12.84 JP 268457/84**

(43) Veröffentlichungstag der Anmeldung:
**02.07.86 Patentblatt 86/27**

(45) Bekanntmachung des Hinweises auf die Patenterteilung:
**10.05.89 Patentblatt 89/19**

(84) Benannte Vertragsstaaten:
**AT BE CH DE FR GB IT LI NL SE**

(56) Entgegenhaltungen:
**US-A-3 812 225**
**US-A-4 435 346**

(73) Patentinhaber: **Hüls Troisdorf Aktiengesellschaft, Postfach 11 65, D-5210 Troisdorf (DE)**

(72) Erfinder: **Yoshida, Iwao, 12- 52 Otsukatakaiwa Yamashina- ku, Kyoto- shi Kyoto- fu (JP)**
Erfinder: **Murase, Yutaka, 28- 2-204 Shakusonji-cho, Hirakata- shi Osaka- fu (JP)**
Erfinder: **Miyamoto, Masayasu, 324 Yodomizu- cho Fushimi- ku, Kyoto- shi Kyoto- fu (JP)**
Erfinder: **Sahara, Masaaki, 62- 1 Nishiyama Ogura-cho, Uji- shi Kyoto- fu (JP)**

EP 0 186 110 B1

**Beschreibung**

Die Erfindung bezieht sich auf ein Verfahren zum Herstellen von vernetzten geschlossenzelligen Polyolefin-Schaumstoffkörpern, bei dem eine vernetzbare, schäumbare Zusammensetzung während einer vorgegebenen Zeitspanne unter Anwendung von Druck erhitzt und anschließend während einer vorgegebenen Zeitspanne bei Atmosphärendruck weiter erhitzt wird.

Es ist bekannt, vernetzten Polyolefin-Schaumstoff in der Weise herzustellen, daß zuerst das Polyolefin physikalisch vernetzt wird und anschließend thermisch das vernetzte Polyolefin ausgeschäumt wird oder das Polyolefin chemisch vernetzt wird und dann thermisch das vernetzte Polyolefin unter Anwendung von Druck oder Atmosphärendruck verschäumt wird. Ein gegenüber dem letzteren bereits verbessertes Verfahren wird in der britischen Patentschrift 1 328 525 beschrieben, bei dem in einer ersten Stufe eine Zusammensetzung bestehend aus Polyolefin, Vernetzungsmittel und Treibmittel, unter Anwendung von Druck für eine bestimmte Zeit erhitzt wird, wobei das Vernetzungsmittel und das Treibmittel teilweise zersetzt werden und ein teilgeschäumtes Produkt entsteht, und in einer zweiten Stufe das teilgeschäumte Produkt weiter bei Atmosphärendruck für eine bestimmte Zeit erhitzt wird, wobei das restliche Vernetzungsmittel und Treibmittel zersetzt werden. Mit diesem Verfahren kann ein vernetzter Polyolefin-Schaumstoff erhalten werden, der relativ gleichmäßige, feine, geschlossene Zellen und eine geringe Dichte und große Dicke aufweist. Dieses Verfahren erfordert allerdings in der ersten Stufe eine Teilform, deren Seitenwände sich konisch erweitern, da sonst das teilgeschäumte Produkt nicht problemlos entformt werden kann. Daher ist die in der ersten Stufe benutzte Metallform konisch erweitert und das teilgeschäumte Produkt wird erhalten, indem das geschäumte Polymer während der Druckentlastung aus der Metallform herausspringt. Während dieses Entformungsvorganges expandiert das Polymer in eine der Metallform entsprechende Gestalt, da die Form keine Stütze hat. Wenn nun dieses teilgeschäumte Produkt direkt in einer nicht-gasdichten Form von rechteckigem Querschnitt bei Atmosphärendruck durch Erhitzen ausgeschäumt wird, rufen die konischen Teile des teilgeschäumten Produktes das Phänomen des Rollens hervor. Um dieses Phänomen auszuschalten, ist es erforderlich, die konischen Teile des teilgeschäumten Produktes vor dem endgültigen Verschäumen abzuschneiden. Dies hat den Nachteil eines erheblichen Materialabfalls, wodurch die Materialausbeute gering ist und die Verarbeitbarkeit leidet.

Desweiteren ist es im allgemeinen schwierig, bei einem Verfahren, bei dem das Vernetzen und Verschäumen des Polyolefins in zwei Stufen vorgenommen wird, d. h. der ersten Stufe des Schäumens unter Anwendung von Druck und der zweiten Stufe des Schäumens bei Atmosphärendruck, Zellen, d. h. Zellwände mit hoher Zähigkeit zu erhalten. Die produzierten Zellwände zeigen alle Frakturen durch die Kraft der Drücke und deshalb kommunizieren die Zellen miteinander, so daß als Ergebnis ein Schaum mit geschlossenen Zellen nicht erhalten wird, wie in der japanischen Patentoffenlegungsschrift SHO 56(1981)-130 dargelegt ist.

Ziel der Erfindung ist daher ein Verfahren zum Erzeugen von dickem vernetztem Polyolefin-Schaumstoff mit einem hohen Expansionsgrad, der eine große Zähigkeit, die mit konventionellen Methoden nicht erreichbar ist, und der gleichmäßige feine geschlossene Zellen aufweist.

Ein anderes Ziel der Erfindung ist ein Verfahren zum Erzeugen von vernetztem Polyolefin-Schaumstoff mit den vorgenannten ausgezeichneten Eigenschaften bei hoher Materialausbeute und guter Verarbeitbarkeit.

Diese Ziele werden gemäß der vorliegenden Erfindung bei einem Verfahren der gattungsmäßigen Art dadurch erreicht, dass eine Zusammensetzung enthaltend auf 100 Gew.-Teile Polyolefin mit einem Schmelzindex (melt flow rate MFR) im Bereich von etwa 0,1 bis 5,0 g/10 min

0,2 bis 1,0 Gew.-Teile eines Vernetzungsmittels,

10 bis 3o Gew.-Teile eines Treibmittels und

0 bis 0,6 Gew.-Teile eines Hilfsschäummittels, in eine geschlossene Form gefüllt und darin unter Anwendung eines Drucks von mindestens 10 bar bei Temperaturen im Bereich von 120 bis 160°C während etwa 20 bis 70 min erhitzt und zu einer der Form entsprechenden gestalt geformt wird, wobei ein vernetztes im wesentlichen unverschäumtes Produkt mit einem Gelgehalt von etwa 10 bis 70 % und einem Schäumgrad im Bereich des etwa 1 bis 3fachen des Ursprungsvolumens erhalten wird, und anschließend dieses vernetzte unverschäumte Produkt durch Erhitzen bei Atmosphärendruck in einer nicht-gasdichten Form, die einer gewünschten Gestalt entspricht, verschäumt, wobei ein dicker zäher Schaumstoffkörper mit gleichmäßigen feinen Zellen erhalten wird.

Erfindungsgemäß wurde erkannt, daß bei einem Verfahren, mit den Schritten des Pressens einer vernetzbaren schäumbaren Zusammensetzung in einer geschlossenen Form, wobei die Zusammensetzung die durch die Form vorgegebene Gestalt erhält, und anschließendem Verschäumen der vorgeformten Zusammensetzung unter Anwendung von Druck nur dann ein zäher und dicker Schaumstoff mit gleichmäßigen feinen geschlossenen Zellen, die von nicht gebrochenen Zellmembranen umgeben werden, erhalten wird, wenn ein Polyelefin mit einem spezifischen Schmelzindex zusammmen mit Vernetzungsmittel, Treibmittel und Hilfsschäummittel in spezifischen Proportionen in bezug auf das Polyolefin verwendet werden und das Verformen unter Druck und Hitze in einer solchen Weise durchgeführt wird, daß ein vernetztes im wesentlichen unverschäumtes Produkt mit einem Teilvernetzungsgrad im Bereich von 10 bis 70 % Gelgehalt und einer Expansionsrate des 1 bis 3fachen des Originalvolumens erztugt wird.

Ein zäher und dicker Schaumstoff mit gleichmäßigen feinen geschlossenen Zellen mit ungebrochenen Membranen wird, wie vorangehend beschrieben, durch Verwendung eines Polyolefins mit ausgewähltem Schmelzindex, Kombinieren des Polyolefins mit einem Vernetzungsmittel, einem Treibmittel, und einem Hilfsschäummittel in ausgewählten Mengen, Durchführen der thermischen Verformung unter Anwendung von Druck in einer solchen Weise, daß ein bestimmter Gelgehalt und eine bestimmte Expansionsrate erzielt werden, und schließlich vollständiges Ausschäumen bei atmosphärischem Druck, erhalten.

Der Gelgehalt des vernetzten im wesentlichen unverschäumten Produktes der ersten Stufe liegt bevorzugt bei 20 bis 65 %, besonders bevorzugt bei 25 bis 60 %.

Mit dem Begriff "Preßdruck in bar (kg/cm$^2$)" ist die Größe des in der Metallform durch hydraulischen Druck erzeugten Druckes gemäß der folgenden Formel zu verstehen:

$$\text{Preßdruck in bar (kg/cm}^2) = \frac{\text{(Hydraulischer Preßdruck des Presstempels) x (Querschnitt des Presstempels)}}{\text{Fläche des mit Zusammensetzung gefüllten Teils, der mit der heißen Platte kontaktiert}}$$

Der Begriff "Gelgehalt in Prozent" bedeutet das Verhältnis des Gewichts der Probe nach Extraktion zu dem Gewicht vor Extraktion, wobei die Extraktion unter Rückfluß von Trichlorethylen als Lösungsmittel innerhalb von 24 Stunden in einer Soxhlet-Apparatur unter Verwendung eines Glasfilters von 40 bis 50, um Maschengröße durchgeführt wird.

Der Begriff "Schäumgrad" bzw. "Expansionsrate" bedeutet das Verhältnis des Volumens der vernetzten, unverschäumten, in eine vorgegebene Gestalt geformten Zusammensetzung (oder das Volumen des als Endprodukt hergestellten Schaumstoffkörpers, bei dem die Expansionsrate des Endproduktes zu bestimmen ist) zu dem Volumen der Metallform (womit das Formnest gemeint ist).

In Übereinstimmung mit der Erfindung wird ein Polyolefin verwendet, dessen Qualität durch den Schmelzindex (melt flow rate MFR), der Schmelzindex wird nach der in JIS K-6760-1971 spezifizierten Methode ermittelt, bestimmt ist. Wenn der MFR des Polyolefins kleiner als 0,1 g/10 min ist, so ist das Polyolefin zu steif um gestreckt zu werden und daher ist es schwer zu expandieren. Umgekehrt, wenn der MFR 5,0 g/10 min übersteigt, leidet das Polyolefin unter dem Verlust von Gas während des thermischen Verschäumens und das Herstellen von Schaum mißlingt.

Die Menge des einzuarbeitenden Vernetzungsmittels und anderer Mittel variieren geringfügig in Abhängigkeit von der Art des benutzten Polyolefins und der gewünschten Expansionsrate. Im allgemeinen liegt die Menge des benutzten Vernetzungsmittels im Bereich von 0,2 bis 1,0 Gew.-Teilen, die des Treibmittels im Bereich von 10 bis 30 Gew.-Teilen und die des Hilfsschäummittels im Bereich von 0 bis 0,6 Gew.-Teilen, jeweils bezogen auf 100 Gew.-Teile Polyolefin. Bei Verwendung eines Polyolefins mit dem angegebenen spezifischen Schmelzindex und Einarbeiten der genannten Zusätze in den angegebenen Mengen wird ein dicker Schaumstoffkörper mit gleichmäßigen feinen geschlossenen Zellen, die von durch den Preßdruck nicht zerbrechbaren Membranen umschlossen werden, mühelos produziert.

Der für das thermische Verformen der vernetzbaren und verschäumbaren Zusammensetzung in der ersten Stufe angewendete Druck soll mindestens 10 bar (kg/cm$^2$) betragen.

Zur Sicherung der Gleichmäßigkeit und Feinheit der einzelnen Zellen des Schaumstoffes und für die Güte der Anwendung des Druckes wird jedoch bevorzugt ein Preßdruck im Bereich von 20 bis 200 bar (kg/cm$^2$), angewendet.

Bei der Durchführung der ersten Stufe der thermischen Verformung der vernetzbaren und verschäumbaren Zusammensetzung beginnt bereits ein extrem geringer Anteil des Treibmittels mit der Zersetzung. Die bei dieser Anfangszersetzung des Treibmittels entstehenden Schaumkeime können wegen ihrer sehr geringen Größe bei der thermischen Verformung unter Anwendung von Preßdruck von 10 bis 200 bar (kg/cm$^2$), bevorzugt 20 bis 200 bar (kg/cm$^2$), der während einer Zeit von 20 bis 70 min ausgeübt wird, unterdrückt werden. Während des nachfolgenden Schrittes des thermischen Verschäumens bewirkt die Gegenwart dieser Schaumkeime ein stetiges Verschäumen und das Aufbauen einheitlicher feiner Zellen. Wenn der Pressdruck während des thermischen Verformens geringer als 10 bar (kg/cm$^2$) ist, enthält der fertig ausgeschäumte Körper grobe Zellen und ihm fehlt die Gleichförmigkeit.

Der Gelgehalt und die Expansionsrate des vernetzten unverschäumten Produktes, das nach der thermischen Verformung der ersten Stufe erhalten wird, kann mit der Art des benutzten Polyolefins, der Menge an Treibmittel, Hilfsschäummittel und Vernetzungsmittel variiert werden. Es wurde bereits darauf hingewiesen, daß infolge dieser variablen Komponenten der hergestellte Schaum hohe Zähigkeit aufweist und gleichmäßige, feine, geschlossene Zellen, die von nur schwer zu brechenden Membranen gebildet werden enthält, solange der Gelgehalt zwischen 10 bis 70 %, bevorzugt 20 bis 65 % und insbesondere zwischen 25 und 60 % beträgt und die Expansionsrate das 1 bis 3fache des Originalvolumens beträgt. Steigt der Gelgehalt über 70 %, so steigt die Vernetzung zu stark an und die Dehnfähigkeit des Polyolefins verringert sich, so daß es unmöglich wird, einen dicken Schaum mit hoher Expansionsrate herzustellen. Ist hingegen der Gelgehalt niedriger als 10 %, so läßt die Festigkeit des Polyolefins derart nach, daß keine geschlossenen zähen Zellen mehr erhalten werden und die Zellmembranen bruchanfällig werden. Es ist also schwierig, einen zähen Schaum stoff mit gleichmäßigen feinen geschlossenen Zellen durch Verschäumen bei Atmosphärendruck zu erhalten. Hingegen gelingt es, durch Verformen unter Wärmeanwendung als vorausgehendem Schritt unter den angegebenen Bedingungen einen zähen Schaum mit gleichmäßigen feinen geschlossenen Zellen wie gewünscht durch die Erfindung zu erhalten.

Der angegebene Bereich des 1 bis 3fachen des Originalvolumens als Expansionsrate für die Teilschäumung in der ersten Stufe repräsentiert die Grenzen, in denen die Schaumkeime, wie vorangehend beschrieben, durch die Initialzersetzung einer sehr geringen Menge des Treibmittels während der Behandlungsdauer des thermischen Verformens die Möglichkeit zum Expandieren haben während der Zeit, da das verformte vernetzte Produkt aus der Metallform entformt wird. Diese Expansion des Polyolefins ist weit entfernt von einer echten Verschäumung und daher wird dieses Produkt auch als vernetztes unverschäumtes Produkt oder Polyolefinzusammensetzung bezeichnet. Dieses geformte Produkt kann leicht aus der Metallform entfernt werden. Das erfindungsgemäße Verfahren benötigt keine sich konisch erweiternde Metallform, die bei konventionellen Verfahren verwendet werden muß. Insoweit arbeitet das erfindungsgemäße Verfahren mit einer höheren Materialausbeute und verbesserter Verarbeitbarkeit.

Mit dem erfindungsgemäßen Verfahren kann ein vernetzter Polyolefinschaum mit gleichmäßigen feinen geschlossenen Zellen, die von zähen und nicht leicht zu brechenden Membranen gebildet werden, hergestellt werden.

Erfindungsgemäß wird ein Polyolefin mit einem spezifischen Schmelzindex MFR eingesetzt. Bevorzugt finden Polyethylene mit einem MFR im Bereich von 0,1 bis 5,0, vorzugsweise 0,5 bis 4,0 g/10 min und Ethylen-Vinylacetat Copolymer, die den gleichen MFR wie das Polyethylen aufweisen, und einen Vinylacetatgehalt im Bereich von 5 bis 20 Gew.-%, vorzugsweise 5 bis 15 Gew.-% aufweisen Verwendung für die Herstellung eines zähen und dicken Schaumstoffes mit feinen gleichmäßigen geschlossenen Zellen. Auch Poly-1,2-Butadien, Ethylen-Propylen-Copolymer, Ethylen-Buten-Copolymer, Copolymere von Ethylen mit nicht mehr als 45 Gew.-% von Methyl-, Ethyl-, Propyl-, oder Butylacrylat oder -methacrylat, chlorierte Produkte dieser Copolymere mit einem Chlorgehalt von bis zu 60 Gew.-%, Gemische aus zwei oder mehr der genannten Polymeren und Gemische dieser Polymeren mit isotaktischem oder ataktischem Polypropylen können verwendet werden. Alle die einsetzbaren Polymere müssen einen MFR im Bereich von 0,1 bis 5,0 g/10 min aufweisen.

Beispiele von Vernetzungsmitteln, die erfindungsgemäß verwendbar sind, umfassen, ohne auf diese beschränkt zu sein, Dicumylperoxid; 1,1-Ditertiär-butyl-peroxy-3,3,5-trimethylcyclohexan; 2,5-Dimethyl-2,5-ditertiär-butylperoxyhexan; 2,5-Dimethyl-2,5-ditertiärbutylperoxyhexin; $\alpha,\alpha$-Ditertiärbutylperoxydiisopropylbenzol; Tertiärbutylperoxyketon, und Tertiärbutylperoxybenzoat. Von den genannten Vernetzungsmitteln hat sich Dicumylperoxid besonders bewährt.

Beispiele für Treibmittel, die erfindungsgemäß verwendbar sind, umfassen die Azoverbindungen, wie Azodicarbonamid und Bariumazodicarboxylat, Nitroso-Verbindungen wie Dinitrosopentamethylentetramin und Trinitrosotrimethyltriamin, Hydrazid-Verbindungen wie p,p'-Oxybis (benzolsulfonylhydrazid), Sulfonylsemicarbazid-Verbindungen wie p,p'-Oxybis (benzol-sulfonylsemicarbazid) und Toluolsulfonylsemicarbazid, unter anderem, ohne hierauf beschränkt zu sein. Unter den aufgeführten Treibmitteln hat sich Azodicarbonamid gut bewährt.

Beispiele für Verschäumungshilfsmittel, die erfindungsgemäß verwendbar sind, umfassen Verbindungen, welche Harnstoff als Hauptkomponente enthalten, Metalloxide wie Zinkoxid und Bleioxid, Verbindungen, die Salizylsäure, Stearinsäure usw. als Hauptkomponente enthalten, d. h. höhere Fettsäuren, Metallverbindungen von höheren Fettsäuren usw., ohne darauf beschränkt zu sein.

Nachstehend wird das Verfahren zum Herstellen der vernetzbaren verschäumbaren Zusammensetzung gemäß der Erfindung bei Verwendung von Dicumylperoxid als Vernetzungsmittel, Azodicarbonamid als Treibmittel und Zinkoxid, aktiviertes Zinkoxid oder Zinkstearat als Verschäumungshilfsmittel an Beispielen erläutert.

Um geschäumte Formkörper mit einer Expansionsrate vom 30fachen des ursprünglichen Volumens des Polyethylens zu erhalten, wird ein Gemisch aus 100 Gew.-Teilen von LD-Polyethylen mit einem MFR von 0,1 bis 5,0, bevorzugt 0,5 bis 4,0 g/10 min und einer Dichte von 0,92 bis 0.93 g/cm$^3$ mit 14 bis 17 Gew.-Teilen Azodicarbonamid, 0 bis 0,4 Gew.-Teilen von aktiviertem Zinkweiß oder Zinkweiß oder 0 bis 0,6 Gew.-Teilen Zinkstearat und 0,5 bis 0,8 Gew.-Teilen Dicumylperoxid hergestellt.

Um einen Schaum mit einer Expansionsrate vom 30fachen des ursprünglichen Volumens der verschäumbaren und vernetzbaren Zusammensetzung durch Verschäumen von Ethylen-Vinylacetat-Copolymer zu erhalten, wird eine Mischung aus 100 Gew.-Teilen von Ethylen-Vinylacetat-Copolymer mit einem MFR von 0,1 bis 5,0, vorzugsweise 0,5 bis 4,0 g/10 min mit einem Vinylacetatgehalt von 5 bis 20 %, vorzugsweise 5 bis 15 % und 14 bis 17 Gew.-Teilen Azodicarbonamid, 0 bis 0,4 Gew.-Teilen von aktiviertem Zinkweiß oder Zinkweiß oder 0 bis 0,6 Gew.-Teilen Zinkstearat und 0,5 bis 0,8 Gew.-Teilen Dicumylperoxid verwendet.

Um einen Schaum mit einer Expansionsrate vom 40fachen des ursprünglichen Volumens der verschäumbaren und vernetzbaren Zusammensetzung auf Basis von Polyethylen zu erhalten, wird eine Mischung von 100 Gew.-Teilen LD-Polyethylen mit einem MFR von 0,1 bis 5,0, vorzugsweise 0,5 bis 4,0 g/10 min und einer Dichte von 0,92 bis 0,93 g/10 min und 18 bis 22 Gew.-Teilen Azodicarbonamid, 0 bis 0,3 Gew.-Teilen von aktiviertem Zinkweiß oder Zink weiß oder 0 bis 0,6 Gew.-Teilen Zinkstearat und 0,5 bis 1,0 Gew.-Teilen Dicumylperoxid verwendet.

Um einen Schaum mit einer Expansionsrate vom 40fachen des ursprünglichen Volumens der

4

verschäumbaren und vernetzbaren Zusammensetzung auf Basis von Ethylen-Vinylacetat-Copolymer zu erhalten, wird eine Mischung aus 100 Gew.-Teilen von Ethylen-Vinylacetat-Copolymer mit einem MFR von 0,1 bis 5,0, vorzugsweise 0,5 bis 4,0 g/10 min, mit einem Vinylacetatgehalt von 5 bis 20 %, vorzugsweise 5 bis 15 % und 18 bis 22 Gew.-Teilen Azodicarbonamid, 0 bis 0,3 Gew.-Teilen von aktiviertem Zinkweiß oder Zinkweiß oder 0 bis 0,6 Gew.-Teilen Zinkstearat und 0,5 bis 1,0 Gew.-Teilen Dicumylperoxid eingesetzt.

Wenn die vorangehend beschriebenen Mischungen in der thermischen Verformungsstufe bei einer Temperatur im Bereich von 120 bis 160°C während einer Zeitspanne von 20 bis 70 min unter Anwendung von Pressdruck im Bereich von 20 bis 200 bar (kg/cm²) erhitzt werden, wird ein vernetztes ungeschäumtes Produkt mit einem Gelgehalt im Bereich von 10 bis 70 % und mit einer Expansionrate im Bereich des 1 bis 3fachen des Originalvolumens erhalten. Nachfolgend wird das vernetzte ungeschäumte Produkt durch Erhitzen in einer nicht-gasdichten Form einer gewünschten Gestalt bei Atmosphärendruck verschäumt, um einen zähen vernetzten Polyolefinschaum mit gleichmäßigen feinen geschlossenen Zellen mit nicht brechbaren Membranen zu erhalten.

Nachfolgend wird die Erfindung im einzelnen erläutert. Zuerst wird die vernetzbare schäumbare Zusammensetzung aus einer Mischung von Polyolefin mit Treibmittel, Vernetzungsmittel und ggf. Verschäumungshilfsmittel in den angegebenen Verhältnissen in das Formnest einer geschlossenen Form gepreßt und thermisch unter Anwendung von Druck bei den angegebenen Bedingungen des Erhitzens von Zeit und Temperatur verformt. Das vernetzte unverschäumte Produkt dieser thermischen Verformung wird aus der Form entnommen. Dieses Produkt wird dann in eine nicht-gasdichte Form einer gewünschten Gestalt, beispielsweise einer Form mit rechteckigem Querschnitt, eingesetzt und während einer vorgeschriebenen Zeit erhitzt, beispielsweise in einer Stickstoffatmosphäre oder in einem Heizmedium, wie beispielsweise einem Rose s Metall, Woods Metall oder dergl. enthaltenden Metallbad, einem Ölbad, einem ein oder mehrere Salze, wie Natriumnitrat, Caliumnitrat, Caliumnitrit oder dergl. enthaltenden Salzbad. Andererseits kann auch das vernetzte unverschräumte Produkt in eine Form von rechteckigem Querschnitt eingesetzt werden, die nicht luftdicht ist und die an der Außenseite mit einem Mantel oder dergl. für ein Heizmedium, wie beispielsweise Dampf versehen sein kann, oder mit einem bewegbaren Metallblech oder dergl. abgedeckt sein kann, und dann für eine vorbestimmte Zeitdauer erwärmt wird. Das in der nicht-gasdichten Form erwärmte Produkt wird anschließend gekühlt, um den Schaum zu erhalten. Die Erhitzungstemperaturen liegen im Bereich von 145 bis 210° C, vorzugsweise 160 bis 190°C und die Erhitzungszeit liegt in der Dauer von 10 bis 90 min, vorzugsweise von 15 bis 40 min. Auf diese Weise kann ein sehr elastischer, zäher und dicker Schaumstoffkörper mit gleichmäßigen, feinen, geschlossenen Zellen mit unzerbrechbaren Zellwänden erhalten werden.

Erfindungsgemäß kann das Erhitzen während der thermischen Verschäumung bei Atmosphärendruck auch in zwei separaten Stufen durchgeführt werden, die es gestatten, die Vernetzungsbedingungen für das Verschäumen zu moderieren. In diesem Zweistufenverfahren des Verschäumens kann die heterogene Wärmeleitung in Richtung der Dicke der verschäumbaren und vernetzbaren Zusammensetzung uterbunden und die Zusammensetzung homogen erhitzt werden. Infolge dessen treten keine solchen Erscheinungen wie Oberflächenrisse auf, die von dem teilweise ungleichmäßigen Verschäumen der Zusammensetzung dem Phänomen des Rollens und dem Entweichen von Gas herrühren. Außerdem ist es möglich, das Expansionsverhältnis des verschäumten Körpers auf das bis zu 70fache des ursprünglichen Volumens zu erhöhen und die Dicke auf bis zu etwa 150 mm. Deshalb ist dieses Zweistufenverfahren besonders geeignet zur Erzeugung von dickeren Schaumstoffkörpern oder von geschäumten Körpern, die ein höheres Expansionsverhältnis als das 20fache des ursprünglichen Volumens haben.

Insbesondere wird bei dem zweistufigen Verschäumungsverfahren das vernetzte unverschäumte Produkt, das wie oben beschrieben geformt worden ist, in der ersten Stufe bei Temperaturen im Bereich von 145 bis 180°C in der oben beschriebenen Weise während 5 bis 60 min., vorzugsweise 10 bis 45 min, erhitzt und thermisch geschäumt, dann wird das so hergestellte Zwischenprodukt herausgenommen und anschließend in der zweiten Verschäumungsstufe in eine nicht-gasdichte Form vorgegebener Gestalt eingelegt und bei Temperaturen im Bereich von 170 bis 210°C in der vorangehend beschriebenen Weise für 5 bis 50 min, vorzugsweise 15 bis 40 min erhitzt und anschließend abgekühlt, wobei ein Schaumstoffkörper von geringer Dichte entsteht. Diese erste Stufe des Verschäumens wird so durchgeführt; daß etwa 5 bis 70 % des Treibmittels zersetzt werden. Wenn der Zersetzungsgrad des Treibmittels in der ersten Stufe sehr hoch ist, werden die Vorteile des Zweistufenverfahrens nicht erreicht.

Im Rahmen der vorliegenden Erfindung können, um die Eigenschaften des Schaums zu verbessern und die Kosten zu reduzieren, gewünschtenfalls Additive und Füllstoffe der Zusammensetzung zugesetzt werden, die keinen nachteiligen Einfluß auf die Vernetzung des Polyolefins haben; Beispiele hierfür sind Ruß, Metalloxide, wie Zinkoxide, Titandioxid, Calciumoxid, Magnesiumoxid und Siliziumdioxid, Carbonate, wie Magnesiumcarbonat und Calziumcarbonat, faserige Füllmaterialien wie Pulpe, verschiedene Farbstoffe, Pigmente und fluoreszierende Materialien und die üblicherweise mit Kautschuk zusammen verarbeitbaren Zusätze.

Bei dem nach dem erfindungsgemäßen Verfahren hergestellten Schaum nimmt der Durchmesser der Zellen in dem Verhältnis ab, wie die Erhitzungszeit während der thermischen Verformung der Zusammensetzung zunimmt, wie an den Beispielen der Tabelle 1, die noch erläutert werden, zu ersehen ist. Damit ist es aber möglich das Aussehen, die Oberflächenbeschaffenheit und die Griffigkeit des Endproduktes Schaum durch Variieren der Erhitzungszeit der Vernetzbaren schäumbaren Zusammensetzung merklich zu beeinflussen.

Die nach dem erfindungsgemäßen Verfahren erhaltenen Polyolefin-Schaumstoffe können mit Vorteil verwendet werden als Wärmeisolierungsmaterial, Lärmschutzmaterial, Prallschutzmaterial, Beschichtungsmaterial, Kernmaterial für Matten, Verpackungsmaterial usw.

Die Erfindung wird nun anhand von Ausführungsbeispielen näher erläutert.

**Beispiel 1**

Eine Zusammensetzung enthaltend 100 Gew.-Teile eines LD-Polyethylens mit einem Schmelzindex MFR von 1,0 und einer Dichte von 0,920 g/cm$^3$ (ein Produkt von Mitsubishi Petro-Chemical Co., Ltd., das unter der Marke Yukalon YF-30 gehandelt wird), 17 Gew.-Teile Azodicarbonamid (ein Produkt der Eiwa Chemical Industry Co., Ltd., das unter der Marke Vinyhol AC 50 S gehandelt wird), 0,1 Gew.-Teile aktiviertes Zinkweiß und 0,6 Gew.-Teile Dicumylperoxid werden in einem Walzenmischer bei 110°C geknetet. Das erhaltene Gemisch wurde in einer Metallform der Abmessungen 750 x 360 x 28 mm, die in einer Presse bei 150°C gehalten wurde, bei einem Preßdruck von 100 bar (kg/cm$^2$ während 30 min erhitzt, um ein vernetztes unverschäumtes Produkt entsprechend den Abmessungen der Form zu formen. Dieses vernetzte unverschäumte Produkt hatte einen Gelgehalt von 42 % und eine Expansionsrate des 1,5fachen des Originalvolumens der Zusammensetzung. Dann wurde das vernetzte unverschäumte geformte Produkt in eine nicht-gasdichte Metallform der Abmessungen 2080 x 1060 x 95 mm, deren Außenwand mit einem Mantel zum Durchleiten eines Heizmediums versehen war, eingelegt und darin mittels Dampf bei 170°C während 80 min erhitzt, anschließend abgekühlt und dann aus der Metallform entnommen. Hierbei wurde ein Schaum mit extrem hoher mechanischer Festigkeit mit gleichmäßigen feinen geschlossenen Zellen erhalten.

Der hergestellte Schaum hatte einen Anteil an geschlossenen Zellen von 82 %, eine gleichmäßige Dicke von 100 mm und Querschnittsabmessungen, die im wesentlichen identisch denjenigen der Metallform entsprachen, und eine Dichte von 0,030 g/cm$^3$. Der Schaum wurde dann fünf mal auf 50 % seines Volumens mit einer Walzenpresse zusammengepreßt, wobei die Zellmembranen nicht brachen und der Anteil an geschlossenen Zellen unverändert blieb. Der Rückstellungsgrad des Schaums betrug 92 % nach einer Stunde.

Bei diesem Schaum war die Materialausbeute hoch und die Verarbeitbarkeit zufriedenstellend und es mußte keine sich konisch erweiternde Metallform benutzt werden, die zu hohen Materialabfällen geführt hätte.

**Beispiel 2**

Ein vernetztes unverschäumtes Produkt gemäß Beispiel 1 wurde in einem Metallbad bei 170°C während 35 min erhitzt, um die Zersetzung von 40 % des Treibmittels zu bewirken und ein vorgeschäumtes Zwischenprodukt der ersten Schäumstufe zu erhalten. Dieses Zwischenprodukt wurde aus dem Metallbad herausgenommen und in eine nicht-gasdichte Metallform der Abmessungen 2080 x 1060 x 95 mm eingelegt urd dann mit der nicht-gasdichten Metallform in einem Metallbad bei 185°C während 40 min erhitzt, um die vollständige Zersetzung des verbliebenen Treibmittels zu bewirken, dann abgekühlt und aus der Form entnommen. Hierbei wurde ein Schaum erhalten, der die gleichen physikalischen Eigenschaften wie der gemäß Beispiel 1 hergestellte Schaum aufwies.

**Beispiel 3**

Eine Zusammensetzung bestehend aus 100 Gew.-Teilen LD-Polyethylen mit einem Schmelzindex MFR 0,5 g/10 min und einer Dichte von 0,920 g/cm$^3$ (ein Produkt der Mitsubishi Petro-Chemical Co., Ltd, das unter der Marke Yukalon HE-60 gehandelt wird) 23 Gew.-Teile Azodicarbonamid (ein Produkt der Eiwa Chemica Industry Co., Ltd., das unter der Marke Vinyhol A. C 50S gehandelt wird), 0,2 Gew.-Teilen Zinkstearat und 0,6 Gew.-Teilen Dicumylperoxid wurde in einem Walzenmischer bei 110°C geknetet. Die erhaltene Mischung wurde dann in eine Metallform der Abmessungen 720 x 330 x 25 mm, die in einer Presse bei 150°C gehalten wurde, gegeben und darin bei einem Pressdruck von 100 bar (kg/cm$^2$) während 40 min erhitzt und verformt, wobei ein vernetztes ungeschäumtes Produkt der Abmessungen 720 x 330 x 25 mm erhalten wurde. Dieses vernetzte unverschäumte Produkt hatte einen Gelgehalt von 45 % und wies eine Expansionsrate des 1,8fachen des Originalvolumens auf. Dann wurde das vernetzte, unverschäumte, geformte Produkt einer thermischen Verschäumung mit den gleichen Bedingungen wie in Beispiel 1 unterworfen. Hierbei wurde ein Schaum mit sehr hoher mechanischer Festigkeit mit gleichmäßigen feinen geschlossenen Zellen erhalten.

Der so hergestellte Schaum hatte einen Anteil an geschlossenen Zellen von 84 %, eine gleichmäßige Dicke von 95 mm, einen Querschnitt und Abmessungen im wesentlichen identisch mit denen der Metallform und eine Dichte von 0,023 g/cm$^3$. Auch dieser Schaum wurde fünf mal auf 50 % seines Volumens mit einer Walzenpresse komprimiert, wobei die Zellmembranen nicht brachen und der Anteil an geschlossenen Zellen unverändert blieb. Die Rückstellungsrate des Schaumes betrug 93 % nach einer Stunde.

Auch in diesem Fall war die Materialausbeute hoch und die Verarbeitbarkeit zufriedenstellend, da ebenfalls eine rechteckige Metallform benutzt werden konnte und keine sich konisch erweiternde Form benötigt wurde, die entsprechende Materialabfälle des Zwischenproduktes zur Folge hätte.

## Beispiel 4

Ein vernetztes, unverschäumtes, geformtes Produkt gemäß Beispiel 3 wurde zur thermischen Verschäumung den gleichen Bedingungen, wie in Beispiel 1 beschrieben, unterworfen. Der erhaltene Schaum zeigte die gleichen physikalischen Eigenschaften wie der Schaum gemäß Beispiel 3.

## Beispiel 5

Eine Zusammensetzung aus 100 Gew.-Teilen Ethylen-Vinylacetat-Copolymer mit einem Vinylacetatgehalt von 14 % und einem Schmelzindex MFR von 1,5 g/10 min und einer Dichte von 0,937 g/ cm$^3$ (ein Produkt der Toyo Soda Manufacturing Co., Ltd., das unter dem Handelsnamen Ultra UW-630 gehandelt wird), 17 Gew.-Teile Azodicarbonamid (ein Produkt der Eiwa Chemical Industry Co., Ltd, das unter dem Handelsnamen Vinyhol AC 50S gehandelt wird) 0,1 Gew.-Teile aktiviertes Zinkweiß und 0,8 Gew.-Teile Dicumylperoxid werden in einem Walzenmischer bei 75°C geknetet. Die Mischung wird dann in eine Metallform mit den Abmessungen 750 x 360 x 28 mm, die in einer Presse bei 145°C gehalten wird, eingelegt und darin bei einnem Preßdruck von 100 kg/cm$^2$ während 40 min erhitzt, um ein vernetztes unverschäumtes Produkt zu formen. Dieses vernetzte unverschäumte Produkt hatte einen Gelgehalt von 35 % und eine Expansionsrate des 2,0-fachen des Originalvolumens der Zusammensetzung. Das erhaltene vernetzte unverschäumte Produkt in Gestalt einer Platte wurde anschließend, wie in Beispiel 2 beschrieben, verschäumt, mit der Ausnahme, daß die Dimensionen der benutzten Metallform für die zweite Stufe des Verschäumens abgeändert wurde in 2080 x 1060 x 95 mm. Hierbei wurde ein Schaum mit extrem hoher mechanischer Festigkeit mit gleichmäßigen feinen geschlossenen Zellen erhaiten.
Der Schaum hatte einen Anteil an geschlossenen Zellen von 80 %, eine gleichmäßige Dicke von 100 mm, einen Querschnitt und Abmessungen im wesentlichen identisch mit denen der Metallform und eine Dichte von 0,03 g/cm$^3$. Auch dieser Schaum wurde fünf mal auf 50 % seines Volumens mittels einer Walzenpresse komprimiert, wobei die Zellen ungebrochen verblieben, und der Anteil an geschlossenen Zellen ebenfalls unverändert blieb. Der Rückstellungsgrad betrug 95 % nach einer Stunde. Auch in diesem Fall war die Materialausbeute hoch und die Verarbeitbarkeit zufriedenstellend entsprechend der benutzten rechteckigen Metallform, die zu keinen zusätzlichen Materialabfällen führte.

## Beispiel 6

Ein vernetztes ungeschäumtes geformtes Produkt, das gemäß Beispiel 5 erhalten wurde, wurde einer thermischen Verschäumung mit den gleichen Bedingungen, wie in Beispiel 1 beschrieben, unterworfen. Hierbei wurde ein Schaum erhalten, der die gleichen physikalischen Eigenschaften aufwies wie der Schaum nach Beispiel 5.

## Vergleichsbeispiel 1

Eine Zusammensetzung aus 100 Gew-Teilen von LD-Polyethylen mit einem Schmelzindex MFR von 7,0 g/10 min und einer Dichte von 0,927 g/cm$^3$ (ein Produkt der Mitsubishi Petrol-Chemical Co,. Ltd., das unter dem Handelsnamen Yukalon YM-61 gehandelt wird), 17 Gew.-Teilen Azodicarbonamid, 0,1 Gew.-Teilen von aktiviertem Zinkweiß und 0,8 Gew.-Teilen Dicumylperoxid werden in einem Walzenmischer bei 110°C geknetet. Dann wurde die Mischung weiter, wie in Beispiel 1 beschrieben, behandelt. Das vernetzte unverschäumte Produkt zeigte eine Expansionrate des 1,4fachen des Originalvolumens der Zusammensetzung und hatte einen Gelgehalt von 40 %. Der fertige Schaum hatte einen Anteil an geschlossenen Zellen von 80 %, eine gleichmäßige Dicke von 95 mm und einen Querschnitt und Abmessungen, die im wesentlichen identisch mit denen der Metallform waren, und eine Dichte von 0,030 g/cm$^3$. Auch dieser Schaum wurde einer 5fachen Zusammen pressung auf 50 % seines Volumens mit einer Walzenpresse unterworfen, wobei die Zellmembranen zerstört wurden (zerbrachen) und der Anteil an geschlossenen Zellen auf 20 % fiel. Die Rückstellungsrate des Schaums betrug 60 % nach einer Stunde. Dieser Schaum hatte eine sehr geringe mechanische Festigkeit.

## Vergleichsbeispiel 2

Eine Zusammensetzung aus 100 Gew.-Teilen Ethylen-Vinylacetat-Copolymer mit einem Vinylacetatgehalt von 6 %, einem Schmelzindex MFR von 6 g/10 min und einer Dichte von 0,923 g/cm³ (ein Produkt der Mitsubishi Petro-Chemical Co., Ltd, das unter dem Handelsnamen Yukalon EVA-10K gehandelt wird) und die gleichen Zusatzstoffe in den gleichen Mengen wie in Beispiel 5 wurden unter den gleichen Bedingungen wie in Beispiel 5 zu einem Schaum verarbeitet. Das vernetzte unverschäumte Produkt zeigte eine Expansionsrate des 2,5fachen des Originalvolumens und einen Gelgehalt von 33 %.

Der hergestellte Schaum hatte einen Anteil an geschlossenen Zellen von 76 %, eine gleichmäßige Dicke von 95 mm, einen Querschnitt und Abmessungen, die im wesentlichen denen der Metallform entsprachen, und eine Dichte von 0,030 g/cm³. Auch dieser Schaum wurde einer 5fachen Komprimierung auf 50 % seines Volumens mit einer Walzenpresse unterzogen, wobei die Zellmembranen zerbrachen und der Anteil an geschlossenen Zellen auf 15 % fiel. Die Rückstellungsrate betrug 70 % nach einer Stunde. Dieser Schaum hatte eine sehr geringe mechanische Festigkeit.

## Beispiele 7 - 9

Es wurde Schaum entsprechend dem in Beispiel 1 beschriebenen Verfahren produziert, mit Ausnahme der Erhitzungstemperatur während der thermischen Verformung in der Presse, die auf 135°C, 145°C und 155°C variiert wurde.

Die Relation zwischen den Erhitzungstemperaturen, die während der thermischen Verformung in der Presse auf die Zusammensetzung ausgeübt wurden und dem Zelldurchmesser des fertig geschäumten Schaums sind in der nachfolgenden Tabelle 1 aufgezeigt.

Tabelle 1

| Beispiele | 7 | 8 | 9 |
|---|---|---|---|
| Erhitzungstemperatur (°C) während Verformung in Presse | 135 | 145 | 155 |
| Zelldurchmesser (mm) | 1,0 | 0,5 | 0,1 |

## Vergleichsbeispiel 3

Die Zusammensetzung gemäß Beispiel 1 wurde wie in Beispiel 1 beschrieben behandelt, mit Ausnahme, daß die Temperatur der Presse auf 115°C geändert wurde, um einen Schaum zu produzieren. Das vernetzte unverschäumte Produkt wies eine Expansionsrate des 1,0fachen des Originalvolumens und einen Gelgehalt von 0 % auf.

Der so hergestellte Schaum hatte einen Anteil an geschlossenen Zellen von 78 %, eine gleichmäßige Dicke von 100 mm und einen Querschnitt und Abmessungen, die im wesentlichen denen der Metallform entsprachen, und eine Dichte von 0,030 g/cm³ Auch dieser Schaum wurde fünf mal auf 50 % seines ursprünglichen Volumens durch eine Walzenpresse komprimiert, wobei die Zellmembranen zerbrachen und der Anteil an geschlossenen Zellen auf 44 % abfiel. Die Rückstellung betrug nach einer Stunde 68 %.

## Patentansprüche

1. Verfahren zum Herstellen von vernetzten geschlossenzelligen Polyolefin-Schaumstoffkörpern, bei dem eine vernetzbare, schäumbare Zusammensetzung während einer vorgegebenen Zeitspanne unter Anwendung von Druck erhitzt und anschließend während einer vorgegebenen Zeitspanne bei Atmosphärendruck weiter erhitzt wird, dadurch gekennzeichnet, daß eine Zusammensetzung, enthaltend auf

| 100 Gew.-Teile | Polyolefin mit einem Schmelzindex (MFR) im Bereich von 0,1 bis 5,0 g/10 min |
| 0,2 bis 1,0 Gew.-Teile | eines Vernetzungsmittels, |
| 10 bis 30 Gew.-Teile | eines Treibmittels und |
| 0 bis 0,6 Gew.-Teile | eines Hilfsschäummittels, |

in eine geschlossene Form gefüllt und darin unter Anwendung eines Drucks von mehr als 10 bar bei Temperaturen im Bereich von 120 bis 160° C während 20 bis 70 min erhitzt und zu einer der Form entsprechenden Gestalt geformt wird, wobei ein vernetztes, im wesentlichen unverschäumtes Produkt mit einem Gelgehalt von etwa 10 bis 70 % und einem Schäumgrad im Bereich des 1- bis 3-fachen des Ursprungsvolumens erhalten wird, und anschließend dieses vernetzte unverschäumte Produkt durch Erhitzen bei Atmosphärendruck in einer nicht-gasdichten Form, die einer gewünschten Gestalt entspricht, verschäumt, wobei ein dikker zäher Schaumkörper mit gleichmäßigen feinen Zellen erhalten wird.

2. Verfahren nach Anspruch 1, dadurch gekennzeichnet, daß das Verschäumen unter Erhitzen bei Atmosphärendruck bei Temperaturen im Bereich von 145 bis 210°C durchgeführt wird.

3. Verfahren nach Anspruch 1, dadurch gekennzeichnet, daß das Verschäumen unter Erhitzen bei Atmosphärendruck in zwei Stufen erfolgt, wobei in der ersten Stufe das Erhitzen bis zur Zersetzung von 5 bis 70 % des Treibmittels in dem vernetzten unverschäumten Produkt durchgeführt wird, und in der zweiten Stufe das Erhitzen zur Zersetzung des verbliebenen Treibmittels bei Temperaturen, die über denjenigen in der ersten Stufe angewandten Temperaturen liegen, durchgeführt wird.

4. Verfahren nach Anspruch 3, dadurch gekennzeichnet, daß für die erste Stufe der Erhitzung Temperaturen im Bereich von 145 bis 180°C und für die zweite Stufe im Bereich von 170 bis 210°C angewendet werden.

5. Verfahren nach Anspruch 1, dadurch gekennzeichnet, daß zum Verformen der vernetzbaren schäumbaren Zusammensetzung Drucke im Bereich von 10 bis 200 bar (kg/cm$^2$) angewendet werden.

6. Verfahren nach Anspruch 1, dadurch gekennzeichnet, daß die vernetzbare schäumbare Zusammensetzung in Formen mit rechteckigem Querschnitt verformt wird.

7. Verfahren nach Anspruch 6, dadurch gekennzeichnet, daß Formen mit rechteckigem Querschnitt mit an der Außenseite angeordneten Kanälen für ein Heizmedium verwendet werden.

8. Verfahren nach Anspruch 1, dadurch gekennzeichnet, daß die schäumbare vernetzbare Zusammensetzung zusätzlich Füllstoffe, Pigmente, Farbmittel, fluoreszierende Substanzen enthält.

## Claims

1. Process for preparing cross-linked polyolefin foamed articles with closed cells, in which a cross-linkable, expandable composition is heated under pressure for a preset period of time and subsequently heated again at atmospheric pressure for a preset period of time, characterised in that a composition containing in

| 100 parts by weight | polyolefin with a melt flow rate (MFR) ranging from 0.1 to 5.0 g/10 min |
| 0.2 to 1.0 parts by weight | of a cross-linking agent, |
| 10 to 30 parts by weight | of a blowing agent and |
| 0 to 0.6 parts by weight | of an auxiliary foaming agent, |

is filled into a closed mould and heated therein for 20 to 70 min at temperatures ranging from 120 to 160° C at a pressure of more than 10 bar and moulded into a shape corresponding to the mould, in which case a crosslinked, essentially unfoamed product with a gel content of approximately 10 to 70 % and a degree of expansion ranging from 1 to 3 times the original volume is obtained, and subsequently this cross-linked, unfoamed product is foamed by heating at atmospheric pressure in a mould, which is not gas-tight, which corresponds to a desired shape, in which case a thick, tough foamed article with uniform, fine cells is obtained.

2. Process according to claim 1, characterised in that the foaming is carried out, at temperatures ranging from 145 to 210°C, by heating at atmospheric pressure.

3. Process according to claim 1, characterised in that the foaming ensues in two stages, by heating at atmospheric pressure, in which case in the first stage the cross-linked, unformed product is heated until 5 to 70 % of the blowing agent decomposes and in the second stage it is heated, until the remaining blowing agent decomposes, at temperatures which lie above those applied in the first stage.

4. Process according to claim 3, characterised in that, for the first stage of heating, temperatures ranging from 145 to 180° C are applied and for the second stage, temperatures ranging from 170 to 210° C.

5. Process according to claim 1, characterised in that pressures ranging from 10 to 200 bar (kg/cm²) are applied for deformation of the crosslinkable, expandable composition.

6. Process according to claim 1, characterised in that the cross-linkable, expandable composition deformed in moulds with a rectangular cross-section.

7. Process according to claim 6, characterised in that moulds with a rectangular cross-section, with channels arranged on the outside for a heating medium, are used.

8. Process according to claim 1, characterised in that the expandable, cross-linkable composition contains in addition fillers, pigments, colouring agents and fluorescent substances.


## Revendications

1. Procédé four la préparation de corps en mousses de polyoléfines réticulées à cellules fermées, dans lequel on chauffe une composition moussable et réticulable pendant une durée déterminée, sous application de pression, puis on poursuit le chauffage pendant une durée déterminée, sous la pression atmosphérique, caractérisé en ce que l'on introduit une composition contenant,

pour 100 parties en poids d'une polyoléfine ayant un indice de fusion (MFR) dans l'intervalle de 0,1 à 5,0 g/10mn,

de 0,2 à 1,0 partie en poids        d'un agent réticulant,
de 10 à 30 parties en poids         d'un agent porogène, et
de 0 à 0,6 partie en poids          d'un agent auxiliaire de moussage,

dans un moule fermé dans lequel, en appliquant une pression supérieure à 10 bar, on la chauffe à des températures dans l'intervalle de 120 à 160°C pendant une durée de 20 à 70mn et on la moule en une forme correspondant à celle du moule, ce qui donne un produit réticulé, pratiquement non moussé, avec une teneur en gel d'environ 10 à 70 % et un degré de moussage dans l'intervalle de 1 à 3 fois le volume initial, après quoi ce produit réticulé, non moussé, est moussé par chauffage, sous la pression atmosphérique, dans un moule non étanche aux gaz et correspondant à la forme voulue, ce qui donne un corps en mousse épais, résistant, à cellules fines et régulières.

2. Procédé selon la revendication 1, caractérisé en ce que le moussage est réalisé par chauffage, sous la pression atmosphérique, à des températures dans l'intervalle de 145 à 210°C.

3. Procédé selon la revendication 1, caractérisé en ce qu'on réalise le moussage par chauffage, sous la pression atmosphérique, en deux étapes, en effectuant, dans la première étape, un chauffage jusqu'à décomposition de 5 à 70 % de l'agent porogène contenu dans le produits réticulé et non moussé, et dans la deuxième étape, un chauffage pour la décomposition du reste de l'agent porogène, à des températures supérieures à celles appliquées dans la première étape.

4. Procédé selon la revendication 3, caractérisé en ce que l'on applique, dans la première étape de chauffage, des températures dans l'intervalle de 145 à 180°C, et dans la deuxième étape, des températures dans l'intervalle de 170 à 210°C.

5. Procédé selon la revendication 1, caractérisé en ce que, pour le moulage de la composition moussable et réticulable, on applique des pressions dans l'intervalle de 10 à 200 bar (kg/cm²).

6. Procédé selon la revendication 1, caractérisé en ce que l'on moule la composition moussable et réticulable dans des moules à section rectangulaire.

7. Procédé selon la revendication 5, caractérisé en ce que l'on utilise des moules à section rectangulaire et munis de canaux pour un fluide chauffant, disposés sur la face externe.

8. Procédé selon la revendication 1, caractérisé en ce que la composition moussable et réticulable contient en outre des charges, des pigments, des colorants, des substances fluorescentes.